(19) Europäisches Patentamt
European Patent Office
Office européen des brevets

(11) **EP 1 683 831 A1**

(12) **EUROPÄISCHE PATENTANMELDUNG**

(43) Veröffentlichungstag:
26.07.2006 Patentblatt 2006/30

(51) Int Cl.:
*C08K 3/22* (2006.01)    *C08L 75/04* (2006.01)
*C08J 9/00* (2006.01)

(21) Anmeldenummer: 06000457.9

(22) Anmeldetag: 11.01.2006

(84) Benannte Vertragsstaaten:
AT BE BG CH CY CZ DE DK EE ES FI FR GB GR
HU IE IS IT LI LT LU LV MC NL PL PT RO SE SI
SK TR
Benannte Erstreckungsstaaten:
AL BA HR MK YU

(30) Priorität: 24.01.2005 DE 102005003299

(71) Anmelder: **Goldschmidt GmbH**
**45127 Essen (DE)**

(72) Erfinder:
• **Boinowitz, Tammo Dr.**
**45131 Essen (DE)**
• **Landers, Rüdiger Dr.**
**45257 Essen (DE)**
• **Schlöns, Hans-Heinrich**
**45289 Essen (DE)**

(54) **Nanopartikel für die Herstellung von Polyurethanschaum**

(57) Die Erfindung betrifft ein Nukleierungsmittel für die Herstellung von Polyurethanschaumstoff, das Nanopartikel enthält, einen Polyurethanschaumstoff enthaltend Nanopartikel, die Verwendung des Nukleierungsmittels zur Herstellung des Polyurethanschaumstoffs, ein Verfahren zur Zellstruktursteuerung unter Einsatz des Nukleierungsmittels, ein Verfahren zur Herstellung des Polyurethanschaumstoffs sowie ein System zur Durchführung des Verfahrens umfassend getrennte Einzelkomponenten.

Figur 2/5

Einfluß verschiedener partikulärer Zusätze auf die Zellgröße im PU Schaum (handgezählt)

**Beschreibung**

Die Erfindung betrifft ein Nukleierungsmittel für die Herstellung von Polyurethanschaumstoff (PU-Schaum), das Nanopartikel enthält, einen Polyurethanschaumstoff enthaltend Nanopartikel, die Verwendung des Nukleierungsmittels zur Herstellung des Polyurethanschaumstoffs, ein Verfahren zur Zellstruktursteuerung unter Einsatz des Nukleierungsmittels, ein Verfahren zur Herstellung des Polyurethanschaumstoffs sowie ein System zur Durchführung des Verfahrens umfassend getrennte Einzelkomponenten.

Unter Nanopartikeln versteht man Partikel, mit einer Teilchengröße deutlich kleiner als ein Mikrometer. Dabei finden Nanopartikel bereits Einsatz für verschiedene Anwendungen. So werden sie als Additive im Bereich der Lackindustrie zur Erhöhung der Härte/Kratzfestigkeit bei unbeeinflusster Transparenz benutzt. Titandioxid-Nanoartikel sind darüber hinaus antimikrobiell wirksam. Zinkoxid- und Titandioxid-Nanopartikel können für den UV-Schutz eingesetzt werden.

Nanotechnologie, d.h. die Erforschung und Nutzung von Strukturen im Nanometerbereich ist schon seit langem auch relevant für den Bereich der Herstellung von PU-Schäumen. Zum einen ist die Substruktur von Polyurethanen sehr oft im Bereich von Nanometerdimensionen heterogen (Phasentrennung in Hart- und Weichsegment). Analytische Methoden der Nanotechnologie (z.B. Rasterkraftmikroskopie) haben hier weite Verbreitung für die Analytik gefunden. Zum anderen sind auch schon Nanopartikel als Füllstoffe für PU-Schaum analog zu den weit verbreiteten Mikropartikelfüllstoffen eingesetzt worden. Es konnte beim Einsatz von Mikropartikeln festgestellt werden, dass die Zellstruktur bei hohen Konzentrationen der Mikropartikel (typischerweise 5 - 20 Gew.%) feiner wird. Durch den Zusatz dieser hohen Konzentrationen von Mikropartikeln ändern sich dabei oft die mechanischen Eigenschaften (Härte, Elastizität) des PU-Schaums. Diese Änderungen sind oft unerwünscht (z.B. geringere Elastizität). Auch spezielle Nanopartikel (speziell interkalierte Schichtsilikate) sind schon wiederholt im PU-Schaum eingesetzt worden. Dabei wurde keine wesentlich höhere Zelldichte beobachtet.

Im Stand der Technik wurden Nanopartikel bislang zusammen mit anderen Komponenten wie beispielsweise Stabilisatoren und den übrigen Ausgangsmaterialien für die Herstellung von Polyurethanschaum vermischt. Es wurde bisher beim Einsatz herkömmlicher Nukleierungsmittel (z.B. Polymerpolyole oder mineralischer Mikropartikel) lediglich eine geringfügige Verfeinerung der Zellstruktur beobachtet (weniger als 20 % mehr Zellen pro cm) oder es mussten hohe Konzentrationen eingesetzt werden.

Bekannte partikuläre Nukleierungsmittel für den PU-Schaum müssen daher bislang typischerweise zu mindestens 10 Gew.% im Polyurethanschaum enthalten sein, damit sie einen deutlichen Effekt auf die Zellstruktur haben. Weit verbreitet ist die Verwendung von Nukleierungsmitteln (auch Nanopartikeln) aber bei der Extrusion von Schmelzen gasbeladener thermoplastischer Kunststoffe. Dieser Vorgang ist allerdings mit der PU Verschäumung nicht vergleichbar. So werden in dem einen Fall in einem rein physikalischen Prozess thermoplastische Polymere mit einem externen Treibmittel aufgeschäumt, während bei der Herstellung eines PU Schaumes eine chemische Reaktion zur Bildung eines duroplastischen Polymernetzwerkes führt. Das wichtigste Treibmittel ist dabei das durch die Reaktion des Wassers mit dem Isocyanat gebildete Kohlendioxid. Dabei bedingt die Bildung eines PU Schaumes andere Anforderungen an ein Nukleierungsmittel.

X. Han et al. beschreiben in ihrem Artikel in Polymer Engineering and Science, June 2003, Vol. 43, No. 6 auf den Seiten 1261 -1275 Polystyrol-Nanokomposite und Schaumstoffe daraus. Diese Schaumstoffe werden dadurch erhalten, dass ein Gemisch aus Polystyrol und Nanopartikel durch Coextrusion verschäumt wird. Die Zellgröße verringert sich durch die Präsenz der Nanopartikel leicht um etwa 14 %.

D. Klempner et al. beschreiben in dem Buchkapitel "Energy-Absorbing Multikomponent Interpenetrating Polymer Network Elastomers and Foams" in "Multiphase Polymers: Blends and Ionomers", American Chemical Society, 1989 auf den Seiten 263 bis 308 Komposite aus Polyurethanschaum und Mikropartikeln aus Graphit.

I. Javni et al. beschreiben in Ihrem Artikel in Journal of Cellular Plastics, Vol. 38, May 2002 auf den Seiten 229 bis 240 Komposite aus Polyurethanschaum und Nanopartikeln aus $SiO_2$, in denen der Gewichtsanteil der Nanopartikel mindestens 5 Gew.% beträgt.

B. Krishnamurthi et al. beschreiben in Ihrem Artikel in den Conference Proceedings - Polyurethanes Expo, Columbus, OH, United States, Sept. 30-Oct. 3, 2001 (2001), 239-244 (Publisher: Alliance for the Polyurethanes Industry, Arlington, Va.) Komposite aus Polyurethanschaum und Clustern, wobei mindestens 5 Gew.% der Cluster bezogen auf das eingesetzte Polyol verwendet werden. Die Cluster waren im Mikrometerbereich, dabei aber aufgebaut aus Nanopartikeln. Bei den Nanopartikeln handelt es sich um Schichtsilikate.

WO 03/059817 A2 beschreibt Komposite aus Polyurethanschaum und Nanopartikeln, wobei der Anteil der Nanopartikel mindestens 2,5 Gew.% beträgt.

US 2003/0205832 A1 beschreibt Komposite aus Polyurethanschaum und Nanopartikeln, wobei Zellenanzahl pro cm jedoch durch den Einsatz der Nanopartikel lediglich um etwa 26% zunimmt.

EP 0857740 A2 beschreibt Komposite aus Polyurethanschaum und Mikropartikeln.

WO 01/05883 A1 beschreibt Komposite aus Polyurethan-basiertem Elastomer und Nanopartikeln.

US 6121336 A beschreibt Komposite aus Polyurethanschaum und Mikropartikeln aus $SiO_2$ Aerogelen.

RU 2182579 C2 beschreibt magnetische Komposite aus Schaumstoffen und magnetischen Nanopartikeln, wobei der Anteil der Nanopartikel mindestens 2 Gew.% beträgt.

EP 1209189 A1 beschreibt Komposite aus Polyurethanschaum und Nanopartikeln aus $SiO_2$.

Der Erfindung liegt die Aufgabe zugrunde, eine wesentlich feinere Zellstruktur von Polyurethanschaumstoffen durch Einsatz von möglichst geringen Mengen Nukleierungsmittel zu erzeugen ohne die mechanischen Eigenschaften des PU-Schaumes wesentlich zu verändern.

In einer ersten Ausführungsform wird diese Aufgabe gelöst durch ein Nukleierungsmittel für die Herstellung von Polyurethanschaumstoff, das dadurch gekennzeichnet ist, dass es

a) 0,5 bis 60 Gew.% Nanopartikel mit einem durchschnittlichen Durchmesser in einem Bereich von 1 bis 400 nm, typischerweise aber von 1 bis 200 nm,

b) 0,5 bis 99,5 Gew.% Dispergiermittel, und

c) 0 bis 99,0 Gew.% Lösungsmittel,

jeweils bezogen auf die Gesamtmenge des Nukleierungsmittels enthält.

Überraschenderweise konnte durch den Einsatz des erfindungsgemäßen Nukleierungsmittels eine wesentliche Zellverfeinerung beobachtet werden. Mit dem erfindungsgemäßen Nukleierungsmittel konnte in Polyurethanschäumen trotz Einsatz von nur 0,01 bis 5 Gew.% Nukleierungsmittel bezogen auf alle Ausgangsmaterialien des Polyurethanschaums mehr als 70%, meistens sogar mehr als 90% mehr Zellen pro cm erzeugt werden.

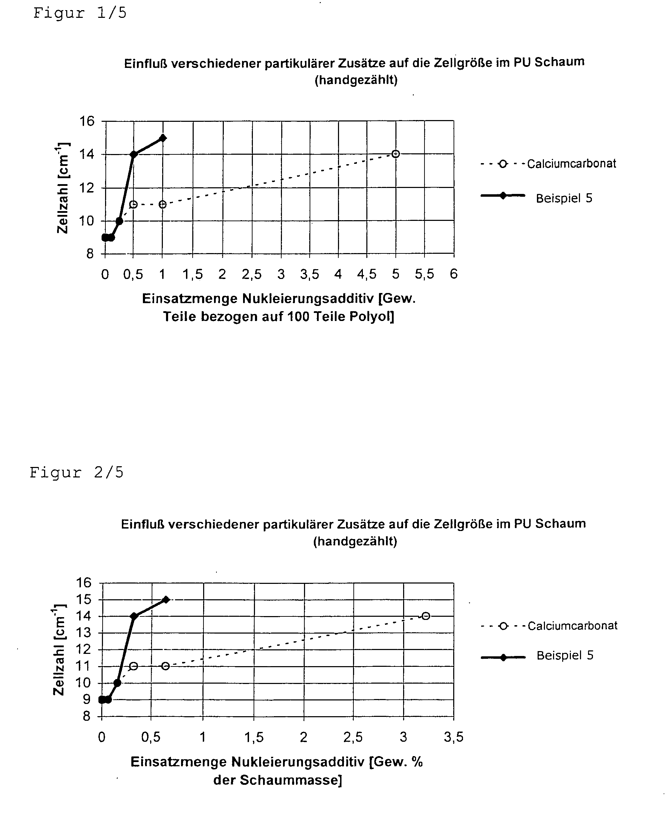

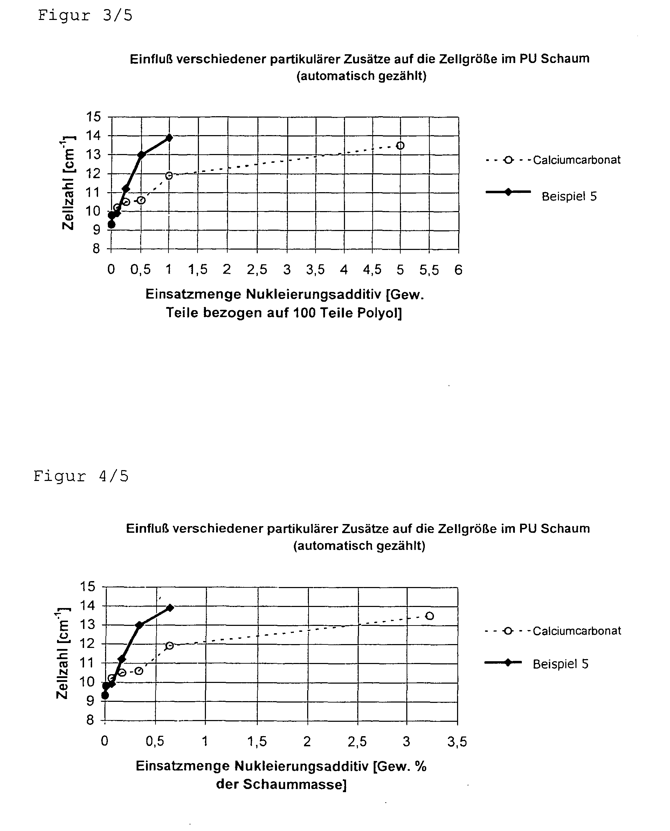

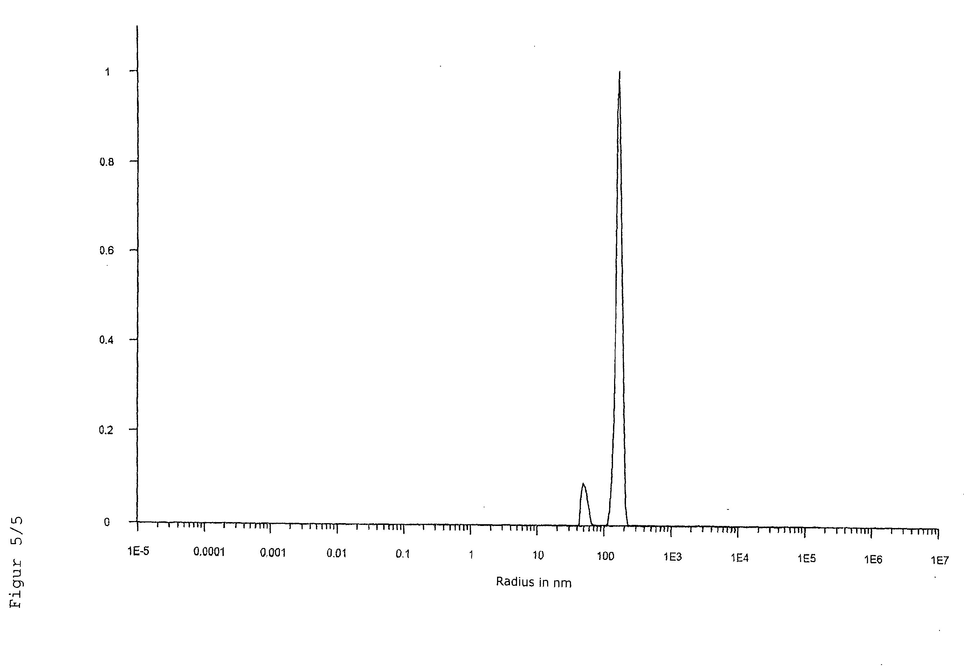

Die wesentlich größere Aktivität der Nanopartikel kann auch bei einem direkten Vergleich von Calciumcarbonat-Mikropartikeln mit einer Dispersion von Aerosil® Ox 50 Nanopartikeln beobachtet werden. Schon sehr geringe Einsatzmengen der Nanopartikeldispersionen (0,5 bis 1,0 Gew. Teile) führen zu drastisch feineren Schäumen. Verglichen werden bei den beigefügten Figuren 2 Zellverfeinerungsadditive. Bei den Nanopartikeln wird eine 30% Dispersion eingesetzt. Das Calciumcarbonat (Fluka, durchschnittliche Partikelgröße: ca. 1,5 Mikrometer) wird in reiner Form eingesetzt. Bezogen auf die eingesetzte Menge Feststoff ist die Aktivität des Nanomaterials also noch etwa 3x höher, als dies durch die dargestellten Figuren wiedergegeben wird.

Nukleierungsmittel im Sinne der Erfindung ist ein Additiv bei der Herstellung von Polyurethanschaum, das die Nukleierung von Gasblasen und Schaumzellen begünstigt. Dagegen bewirken Nukleierungsmittel bei der Verarbeitung nichtgeschäumter thermoplastischer Polymere eine Erhöhung der Temperatur, bei der eine Kristallisation der Schmelze beginnt, eine Erhöhung der Wachstumsgeschwindigkeit der Sphärolite und des kristallinen Anteils und eine Verringerung der Sphärolitgröße. Als Nukleierungsmittel dienen meist unlösliche anorganische Füllstoffe wie Metalle, Metalloxide, Metallsalze, Silikate , Bornitride oder andere anorganische Salze, die auch erfindungsgemäß eingesetzt werden können. Bei den physikalisch geschäumten thermoplastischen Polymeren können aufgrund technischer Gegebenheiten (hohe Temperatur, hohe Viskosität) keine Nanopartikeldispersionen eingesetzt werden. Stattdessen können hier aber pulverförmige Nanopartikel analog den Nanopartikeldispersionen eingesetzt werden. Bei dem Polyurethanschaum zeigen nicht dispergierte Nanopartikel allerdings nur eine ungleich geringere Aktivität, was durch die oben angeführte Literatur bestätigt wird.

Durch den Einsatz des erfindungsgemäßen Nukleierungsmittels kommt es weiterhin überraschenderweise zu einer deutlich geringeren Vergilbung des resultierenden Schaumstoffs, wenn dieser UV-Strahlung ausgesetzt ist.

Durch den Einsatz des erfindungsgemäßen Nukleierungsmittels kann es weiterhin zu einer Beeinflussung des Brandverhaltens des PU Schaumes kommen. Dabei bewirken ausgewählte Nanopartikel einen verbesserten Brandschutz. Besonders bevorzugt werden hierfür Aluminiumoxide eingesetzt.

Im Gegensatz zum Stand der Technik wurde überraschend schon bei sehr kleinen Mengen von vorzugsweise bis zu 30 Gew.%igen Nanopartikeldispersionen (dem Nukleierungsmittel) eine sehr deutliche Verfeinerung der Zellstruktur beobachtet (von ca. 10 Zellen /cm auf 18 Zellen/cm).

Bevorzugt beträgt der Anteil von Nanopartikeln am Nukleierungsmittel 25 bis 35 Gew.%, besonders bevorzugt etwa 30 Gew.% bezogen auf das Nukleierungsmittel.

Vorteilhafterweise wird der Anteil von Nanopartikeln des Nukleierungsmittels so eingestellt, dass der resultierende PU-Schaum 0,01 bis 5 Gew.%, insbesondere 0,01 bis 1 Gew.%, bevorzugt 0,25 bis 0,7 Gew.% Nanopartikel bezogen auf das Gewicht des Schaumstoffs enthält.

Diese Verfeinerung ist angesichts der geringen Einsatzmenge (effektiv besonders bevorzugt etwa 0,6 % Nanopartikel bezogen auf das Gewicht des Schaumstoffs) ungleich stärker, als alle bisher durch andere Additive beobachteten Zellverfeinerungen. Außerdem ist auch die Signifikanz der Änderung (ca. 80 bis 100 % Zellen pro cm mehr) sehr ungewöhnlich.

Im Unterschied zu den bereits im Stand der Technik eingesetzten Nanopartikeln wird erfindungsgemäß zusätzlich ein Dispergiermittel eingesetzt. Dabei wurde die Wirkung sowohl mit einer Dispersion der Nanopartikel im reinen Dispergiermittel als auch in einer Mischung aus Dispergiermittel und Lösungsmittel (z.B. Wasser) beobachtet. Das Dispergiermittel kann also bevorzugt auch mit dem Lösungsmittel identisch sein. Der Einsatz des Dispergiermittels bewirkt offensichtlich eine sehr feine und stabile Verteilung der Nanopartikel. Andernfalls kommt es zu Agglomeraten, deren Aktivität bezüglich der PU-Verschäumung sehr viel geringer ist. Es wurden vergleichbare Effekte mit Nanopartikeln beispielsweise aus Metalloxid, insbesondere bevorzugt aus Siliciumdioxid, Zinkoxid, Aluminiumoxid (basisch), Aluminiumoxid (neutral), Zirkoniumoxid und Titanoxid beobachtet. Bevorzugt sind Nanopartikel im Sinne der Erfindung nicht Schichtsilikate, da diese die Viskosität des Nukleierungsmittels stark erhöhen und daher das Nukleierungsmittel nur einen geringeren Anteil an Nanopartikeln enthalten kann, bevor es zu pastös und damit nicht mehr einsetzbar für die Herstellung von Polyurethanschaum wird. Nanopartikel aus Ruß zeigten keine so starke Wirkung wie Nanopartikel aus Metalloxiden und führen zu einer Verfärbung des Schaums. Daher bestehen die erfindungsgemäßen Nanopartikel bevorzugt nicht aus Rußen und/oder Schwarzpasten. Die durch die Nanopartikel eingebrachte Heterogenität scheint in Kombination mit einer großen Oberfläche (geringe Partikelgröße) von zentraler Bedeutung zu sein. Der Effekt der Nanopartikel ist dabei auf eine verbesserte Nukleierung / Keimbildung zurückzuführen.

Vorteilhafterweise ist das Nukleierungsmittel frei von herkömmlichen PU-Schaum-Stabilisatoren, damit die Nanopartikel besser dispergiert werden können.

Der durchschnittliche Partikeldurchmesser der Primärpartikel der erfindungsgemäß eingesetzten Nanopartikel liegt vorzugsweise in einem Bereich von 10 bis 200 nm, bevorzugt in einem Bereich von 10 bis 50 nm. Diesem geringen Primarpartikeldurchmesser während der Dispergierung möglichst nahe zu kommen und die Nanopartikeldispersion zu stabilisieren ist das Ziel der Verwendung von Dispergiermitteln in separaten Nanopartikeldispersionen.

Neben dem Einsatz eines geeigneten Dispergiermittels ist auch noch der Eintrag von Scherenergie in die Nanopartikeldispersion vorteilhaft, um die gewünschte feine Verteilung der Nanopartikel im Dispergiermittel bzw. im Gemisch aus Dispergiermittel und Lösungsmittel zu erzielen. Vorzugsweise sind die Nanopartikel des Nukleierungsmittels also teilweise, überwiegend oder insbesondere vollständig deagglomeriert.

Dem Fachmann stehen zur Herstellung der Nanodispersionen verschiedenartige Dispergieraggregate zur Verfügung. Im einfachsten Fall wird die Dispersion der Nanopartikel durch die Einbringung von Scherenergie am Dispermaten realisiert und die Wirksamkeit des ausgewählten Dispergiermittel mittels Abnahme der Viskosität der Nanodispersion beobachtet. Im Labor erwies sich die 10-stündige Dispergierung im Scandex® LAU Disperser DAS 200 der LAU GmbH als besonders effizient für ein Screening. Die industrielle Großfertigung der Nanodispersionen erfolgt dabei praktischerweise mittels Ultraturrax, Perlmühle oder für besonders feine Dispersionen mit Hilfe einer Wet Jet Mill. Die vorgenannte Aufzählung der Dispergierprinzipien erhebt dabei keinen Anspruch auf Vollständigkeit und stellt somit auch keine Beschränkung auf diese Methoden dar, mittels derer die Nanodispersionen als in Polyurethanschaumstoffen zu verwendende Nukleierungsmittel hergestellt werden.

Wichtig ist die Unterscheidung zwischen Dispergiermittel/Emulgator einerseits und PU-Schaum-Stabilisator andererseits. Beide Substanzgruppen umfassen oberflächenaktive Tenside. Während Dispergiermittel / Emulgatoren typischerweise entweder über ein polymeres Rückgrat mit affinen Gruppen verfügen, die bevorzugterweise eine Wechselwirkung mit den Nanopartikeln eingehen und darüber hinaus mittels organischer Seitenketten die Verträglichkeit zur umgebenden Matrix realisieren oder von tensidischer, niedermolekularen Struktur sind, d.h. eine Hydrophilic-Lipophilic Balance in der eher linearen Struktur mit bewusster Attraktivierung bestimmter Molekülblöcke für derartige Nanopartikel aufweisen, so sind Stabilisatoren für PU-Schaum von anderer chemischer Natur und können typischerweise als Polyethersiloxane charakterisiert werden. Solche Polyethersiloxane weisen keine spezifische Affinität zum Nanopartikel auf und entfalten ihre Wirksamkeit ganz im Gegensatz zum Dispergiermitteln gezielt auf einer gesteuerten Unverträglichkeit. Die Nanopartikel können vorzugsweise auch außer mit Dispergiermitteln durch die Anpassung des Zeta-Potentials, des pH-Wertes und der Ladung auf der Oberfläche der Nanopartikel stabilisiert sein.

Deshalb wurde im Stand der Technik beim Einsatz von Nanopartikeln in Polyurethanschäumen in Gegenwart von Stabilisatoren kein nennenswerter Effekt erzielt.

Erfindungsgemäß werden Dispersionen der Nanopartikel in protischen oder aprotischen Lösungsmitteln oder Mischungen derselben bevorzugt, wie beispielsweise Wasser, Methanol, Ethanol, iso-Propanol, Polyole (beispielsweise Ethandiol, 1,4-Butandiol, 1,6-Hexandiol, Dipropylenglykol, Polyetherpolyole, Polyesterpolyole), THF, Diethylether, Pentan, Cyclopentan, Hexan, Heptan, Toluol, Aceton, 2-Butanon, Phthalate, Butylacetat, Ester, insbesondere Triglyceride und pflanzliche Öle, Phosphorsäureester, Phosphonsäureester, des weiteren dibasische Ester, oder verdünnten Säuren wie Salzsäure, Schwefelsäure, Essigsäure oder Phosphorsäure besonders bevorzugt in einem Polyol. Auch verflüssigtes oder überkritisches Kohlendioxid kann als Lösungsmittel eingesetzt werden. Besonders bevorzugte Lösungsmittel sind sogenannte ionische Flüssigkeiten wie beispielsweise VP-D102 oder LA-D 903 der Tego Chemie Service GmbH und/ oder Wasser. Bei der alleinigen Verwendung von ionischen Flüssigkeiten ohne zusätzliches Lösungsmittel übernimmt die Substanzgruppe darüber hinaus die Funktion des Dispergiermittels.

Als ionische Flüssigkeiten ("ionic liquids") bezeichnet man allgemein bei niedrigen Temperaturen (< 100°C) schmelzende Salze, die eine neuartige Klasse von Flüssigkeiten mit nichtmolekularem, ionischen Charakter darstellen.

Im Gegensatz zu klassischen Salzschmelzen, die hochschmelzende, hochviskose und sehr korrosive Medien darstellen, sind ionische Flüssigkeiten bereits bei niedriger Temperatur flüssig und relativ niedrigviskos (K.R. Seddon J. Chem. Technol. Biotechnol. 1997, 68, 351-356).

Ionische Flüssigkeiten bestehen in den meisten Fällen aus Anionen wie zum Beispiel Halogeniden, Carboxylaten, Phosphaten, Alkylsufonaten, Tetrafluoroboraten oder Hexafluorophosphaten kombiniert mit zum Beispiel substituierten Ammonium-, Phosphonium-, Pyridinium- oder Imidazolium-Kationen, wobei die genannten Anionen und Kationen eine kleine Auswahl aus der großen Zahl der möglichen Anionen und Kationen darstellen und damit kein Anspruch auf Vollständigkeit erhoben oder gar eine Einschränkung vorgegeben werden soll.

Daher sind die vorgenannten ionischen Flüssigkeiten LA-D 903 aus der Gruppe der Imidazoliniumsalze und VP-D 102 aus der Gruppe der Alkoxyquats nur Beispiele für besonders wirksame Komponenten.

Dispergiermittel sind dem Fachmann beispielsweise auch unter den Begriffen Emulgatoren, Schutzkolloide, Netzmittel und Detergentien bekannt. Ist das Dispergiermittel vom Lösungsmittel verschieden, enthält das erfindungsgemäße Nukleierungsmittel vorzugsweise 1 bis 45 Gew.%, insbesondere 2 bis 10 Gew.% Dispergiermittel, ganz besonders bevorzugt 4 bis 5 Gew.% Dispergiermittel.

Eine Vielzahl verschiedener Substanzen findet heute Verwendung als Dispergiermittel für Feststoffe. Neben sehr einfachen, niedermolekularen Verbindungen, wie z.B. Lecithin, Fettsäuren und deren Salzen und Alkylphenolethoxylaten, werden auch komplexere hochmolekulare Strukturen als Dispergiermittel eingesetzt. Bei den niedermolekularen Dispergiermitteln werden gemäß dem Stand der Technik oft flüssige Säureester wie beispielsweise Phosphorsäuredibutylester, Phosphorsäuretributylester, Sulfonsäureester, Borate oder die Derivate der Kieselsäure beispielsweise Tetraethoxysilan, Methyltrimethoxysilan, 3-Aminopropyltrimethoxysilan, 3-Aminopropyltriethoxysilan, Glycidyloxypropyltrimethoxysilan, oder Glycidyloxypropyltriethoxysilan verwendet. Bei den hochmolekularen Dispergiermitteln sind es speziell amino- und amidofunktionelle Systeme, die breite Verwendung finden. US-4,224,212 A, EP-0 208 041 A, WO-00/24503 A und WO-01/21298 A beschreiben zum Beispiel Dispergiermittel auf der Basis von Polyester-modifizierten Polyaminen. DE-197 32 251 A beschreibt Polyaminsalze und deren Einsatz als Dispergiermittel für Pigmente und Füllstoffe. Aminoxidgruppen enthaltende Maleinsäureanhydrid-Copolymere und ihre Verwendung als Dispergiermittel für Pigmente oder Füllstoffe werden durch EP 1026178 A beschrieben. Polyacrylsäureester werden mit sauren und/oder basischen Gruppen eingesetzt, die auch versalzt sein können, welche durch Polymerisation von entsprechenden monomeren Acrylsäureestern, wie zum Beispiel Butylacrylat, Acrylsäure, 2-Hydroxyethylacrylat und dessen Alkoxylierungsprodukten und anderen Monomeren mit vinylischen Doppelbindungen wie zum Beispiel Styrol oder Vinylimidazol hergestellt werden können (siehe zum Beispiel EP 0 311 157 B). Es finden sich aber auch Beschreibungen, wie durch Umesterungsreaktionen an Polyacrylsäurealkylestern durch Austausch der Alkylgruppe im Sinne einer polymeranalogen Reaktion durch Alkohole oder Amine solche Dispergiermittel erzeugt werden können (siehe zum Beispiel EP 0 595 129 B, DE 39 06 702 C, EP 0 879 860 A). Des weiteren sind Phosphorsäureester und ihre Verwendung als Dispergiermittel bekannt und dem Stand der Technik zu entnehmen. So werden in der US 4 720 514 A Phosphorsäureester einer Reihe von Alkylphenolethoxylaten beschrieben, die vorteilhafter zur Formulierung wässriger Pigmentdispersionen eingesetzt werden können. US 6 689 731 B2 beschreibt Phosphorsäureester als Dispergiermittel, basierend auf Polystyrol-blockpolyalkylenoxid-Copolymeren. Phosphorsäureester für eine ähnliche Anwendung beschreibt EP 0 256 427 A. Aus der DE 3 542 441 A sind Biphosphorsäuremonoester von Blockcopolymerisaten und deren Salze bekannt. Auch wird deren mögliche Verwendung als Dispergiermittel und Emulgator beschrieben. Die US 4 872 916 A beschreibt die Verwendung von Phosphorsäureestern basierend auf Alkylenoxiden geradkettiger oder verzweiger Aliphaten als Pigmentdispergiermittel. In gleicher Weise ist in US 3 874 891 A die Verwendung entsprechender Sulfate geschildert. Als Dispergiermittel können auch tertiäre Amine und quartäre Ammoniumsalze eingesetzt werden, die eventuell zusätzlich eine katalytische Aktivität bezüglich der bei der Bildung des Polyurethanschaums ablaufenden chemischen Reaktionen haben. Des weiteren können die eingesetzten Dispergiermittel auch selbst einen Einfluss auf die Schaumbildung haben. Dieser Einfluss kann eine stabilisierende Wirkung, eine nukleierende Wirkung, eine die Edukte des PU Schaums emulgierende Wirkung, eine zellöffnende Wirkung oder einen die Gleichmäßigkeit des Schaumes in Randzonen betreffende Wirkung beinhalten.

Besonders bevorzugte Dispergiermittel sind VP-D 102, LA-D 903, Tego® Dispers 752W, Tego® Dispers 650, Tego® Dispers 651 u.a., wobei alle vorgenannten Produkte aus dem Katalog der Tego Chemie Service GmbH stammen.

Sämtliche vorgenannten Dispergiermittel können auch im Sinne der vorliegenden Erfindung eingesetzt werden.

Die Nanopartikel können in einer weiteren Ausführungsform auch direkt dem bei der PU-Verschäumung verwendeten Polyol zugesetzt sein. Die Nanopartikel können also hierbei direkt der ganzen eingesetzten Menge oder einem Teil eines der Hauptreaktionspartner bei der Polyurethanschaumstoff-Herstellung zugesetzt werden. Das Dispergiermittel kann dabei separat oder zusammen mit dem Nanopartikel zugegeben werden. Auch eine Zugabe der dispergierten Nanopartikel (mit Dispergiermittel) zum Stabilisator ist möglich, aber weniger bevorzugt, da dadurch die Viskosität des ehedem schon relativ hochviskosen Stabilisators weiter ansteigen würde. Außerdem wäre es dann nicht mehr möglich, unabhängig voneinander Stabilisierung (über Stabilisatormenge) und Zellgröße (über Menge an Nanopartikeldispersion) einzustellen.

Eine Zugabe der Nanopartikeldispersion zu dem Isocyanat erscheint aufgrund der Reaktivität des Isocyanats weniger empfehlenswert, wenngleich auch sie möglich ist.

Eine Zugabe der Nanopartikeldispersion zu einem Flammschutzmittel stellt eine weitere Möglichkeit dar.

In einer weiteren Ausführungsform wird die der Erfindung zugrunde liegende Aufgabe gelöst durch ein Polyurethanschaumstoff, der dadurch gekennzeichnet ist, dass er eine Zellzahl von mindestens 10, bevorzugt 15 Zellen cm$^{-1}$ aufweist und 0,01 bis 5 Gew.% Nanopartikel enthält mit einem durchschnittlichen Durchmesser in einem Bereich von 1 bis 400 nm. Die Zellzahl wird zum einen manuell mit einer Lupe mit eingelassener Skalierung bestimmt. Dabei wird die Zellzahl an drei verschiedenen Stellen ausgezählt und gemittelt. Alternativ wird die Schaumoberfläche mit einem schwarzen Filzschreiber angefärbt (nur oberste Zellschicht), mit einem Flachbettscanner ein Bild aufgenommen und dieses dann mit einem Bildverarbeitungsprogramm untersucht. Dabei werden eine euklidische Distanztransformation und eine Wasserscheidenrekonstruktion vorgenommen. Eine Bildanalysesoftware liefert den mittleren Feretschen Durchmesser der Zellen, aus denen sich die Zellzahl berechnen lässt. Zwischen den beiden Bestimmungsmethoden ergeben sich oft leichte unterschiedliche Werte (typischerweise ca. 0 bis 2 Zellen Unterschied).

Vorteilhafterweise enthält der erfindungsgemäße Polyurethanschaumstoff 0,01 bis 1 Gew.%, ganz besonders bevorzugt 0,15 bis 0,74 Gew.% Nanopartikel.

Die Größe der Nanopartikel wird dabei vorteilhafterweise durch dynamische Lichtstreuung bestimmt. Entsprechende Verfahren sind dem Fachmann bekannt. Die beigefügte Fig. 5 stellt die massengewichtete Größenverteilung der Nanopartikel Aerosil® Ox50 in wässriger Lösung mit dem Emulgator Tego® Dispers 752W dar (verwendet in Beispiel 5). Es zeigte sich, dass die Größenverteilung bimodal ist: Neben einem relativ kleinen Peak für die freien Primärpartikel (ca. 40 bis 50 nm) liegen auch noch viele Aggregate mit einem deutlich größeren Durchmesser (ca. 100 bis 200 nm) vor. Für die erfindungsgemäße Wirkung sind sowohl freie Primärpartikel, als auch die Aggregate im Nanometerbereich relevant.

Der erfindungsgemäße Polyurethanschaumstoff ist vorzugsweise ein Weichschaum (sowohl auf Polyether- als auch auf Polyester-Polyolen basierend), ein Hartschaum (sowohl auf Polyether- als auch auf Polyester-Polyolen basierend) oder ein mikrozellulärer Schaum. Ferner kann der erfindungsgemäße Polyurethanschaumstoff als Blockschaum oder als Formschaum ausgestaltet sein. Besonders bevorzugt ist der erfindungsgemäße Polyurethanschaumstoff ein Weichschaum. Dieser kann als Heißweichschaum, als viskoelastischer Schaum oder als HR (Kalt)-Schaum auftreten. Weichschaum weist bei Druckbeanspruchung einen relativ geringen Verformungswiderstand auf (DIN 7726). Typische Werte für die Druckspannung bei 40%iger Kompression liegen zwischen 2 und 10 kPa (Durchführung gemäß DIN EN ISO3386-1/2). Die Zellstruktur des Weichschaums ist dabei größtenteils offenzellig. Die Dichte des erfindungsgemäßen Polyurethanschaums liegt vorzugsweise in einem Bereich von 10 bis 80 kg/m$^3$, insbesondere in einem Bereich von 15 bis 50 kg/m$^3$, ganz besonders bevorzugt in einem Bereich von 22 bis 30 kg/m$^3$ (gemessen nach DIN EN ISO 845, DIN EN ISO 823).

Die Gasdurchlässigkeit des erfindungsgemäßen Polyurethanschaums liegt vorzugsweise in einem Bereich von 0,1 bis 30 cm Ethanolsäule, insbesondere in einem Bereich von 0,7 bis 10 cm Ethanolsäule (gemessen durch Messung der Druckdifferenz bei der Durchströmung einer Schaumprobe. Hierfür wird eine 5 cm dicke Schaumscheibe auf eine glatte Unterlage gelegt. Eine 800 g schwere Platte (10 cm x 10 cm) mit zentraler Bohrung (Durchmesser 2 cm) und einem Schlauchanschluss wird auf der Schaumprobe platziert. Über die zentrale Bohrung wird ein konstanter Luftstrom von 8 l/min in die Schaumprobe geleitet. Die auftretende Druckdifferenz (relativ zu ungehindertem Ausströmen) wird mittels einer Ethanolsäule in einem graduierten Druckmesser ermittelt. Je geschlossener der Schaum ist, desto mehr Druck wird aufgebaut und desto mehr wird der Spiegel der Ethanolsäule nach unten gedrückt und desto größere Werte werden gemessen.

In einer weiteren Ausführungsform wird die der Erfindung zugrunde liegende Aufgabe gelöst durch die Verwendung des erfindungsgemäßen Nukleierungsmittels zur Herstellung von Polyurethanschaumstoff.

Vorteilhafterweise wird das erfindungsgemäße Nukleierungsmittel zur Herstellung von Weichschaumstoff verwendet.

In einer weiteren Ausführungsform wird die der Erfindung zugrunde liegende Aufgabe gelöst durch ein Verfahren zur Zellstruktursteuerung von Polyurethanschaum, das dadurch gekennzeichnet ist, dass vor oder bei der Zugabe von Diisocyanat im Herstellungsprozess von Polyurethanschaumstoff 0,01 bis 5 Gew.% des oben definierten Nukleierungsmittels bezogen auf die Gesamtmenge des Polyurethanschaums zugegeben werden, wobei die Zellstruktur im wesentlichen durch die Menge des Nukleierungsmittels, die Menge des Dispergiermittels im Nukleierungsmittel und die Menge und den Durchmesser der Nanopartikel im Nukleierungsmittel gesteuert wird.

Vorteilhafterweise wird im erfindungsgemäßen Verfahren 0,15 bis 4 Gew.% des Nukleierungsmittels bezogen auf die Gesamtmenge des Polyurethanschaums eingesetzt.

In einer weiteren Ausführungsform wird die der Erfindung zugrunde liegende Aufgabe gelöst durch ein Verfahren zur Herstellung von Polyurethan-Schaum umfassend mindestens die Schritte:

a) Vermischen von 100 Gew.-Teilen Polyol, 0,2 bis 5 Gew.-Teilen chemischem Treibmittel, 0,1 bis 5 Gew.-Teilen Stabilisator und 0,01 bis 5 Gew.-Teilen des oben definierten Nukleierungsmittels,

b) Zugeben von 30 bis 70 Gew.-Teilen von Isocyanat, und

c) Vermischen der resultierenden Zusammensetzung.

Vorteilhafterweise werden 0,5 bis 1,5, insbesondere 0,5 bis 1 Gew.-Teile Nukleierungsmittel bezogen auf 100 Gew.-Teile Polyol eingesetzt.

Als Polyole eignen sich solche mit mindestens zwei gegenüber Isocyanatgruppen reaktiven H-Atomen; vorzugsweise werden Polyesterpolyole und Polyetherpolyole eingesetzt. Solche Polyetherpolyole können nach bekannten Verfahren, hergestellt werden, beispielsweise durch anionische Polymerisation von Alkylenoxiden in Gegenwart von Alkalihydroxiden oder Alkalialkoholaten als Katalysatoren und unter Zusatz mindestens eines Startermoleküls, das 2 bis 3 reaktive Wasserstoffatome gebunden enthält oder durch kationische Polymerisation von Alkylenoxiden in Gegenwart von LewisSäuren wie beispielsweise Antimonpentachlorid oder Borfluorid-Etherat oder durch Doppelmetallcyanidkatalyse. Geeignete Alkylenoxide enthalten 2 bis 4 Kohlenstoffatome im Alkylenrest. Beispiele sind Tetrahydrofuran, 1,3-Propylenoxid, 1,2- bzw. 2,3-Butylenoxid; vorzugsweise werden Ethylenoxid und/oder 1,2-Propylenoxid eingesetzt. Die Alkylenoxide können einzeln, alternierend nacheinander oder als Mischungen verwendet werden. Als Startermolekül kommen Wasser oder 2- und 3-wertige Alkohole in Betracht, wie Ethylenglykol, Propandiol-1,2 und -1,3, Diethylenglykol, Dipropylenglykol, Glycerin, Trimethylolpropan usw. Auch polyfunktionelle Polyole wie z.B. Zucker können als Starter eingesetzt werden.
Die Polyetherpolyole, vorzugsweise Polyoxypropylenpolyoxyethylen-polyole, besitzen eine Funktionalität von 2 bis 3 und zahlengemittelte Molekulargewichte im Bereich von 500 bis 8000, vorzugsweise 800 bis 3500.

Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie beispielsweise Dicarbonsäure-mono und/ oder -diester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35/35 bis 50/20 bis 32 Gew.-Teilen, und insbesondere Adipinsäure. Beispiele für zwei- und mehrwertige Alkohole sind Ethandiol, Diethylenglykol, 1,2- bzw. 1,3-Propandiol, Dipropylenglykol, Methyl-Propandiol-1,3, 1,4-Butandiol, 1,5-Pentandiol 1,6-Hexandiol, Neopentylglykol, 1,10-Decandiol, Glycerin, Trimethylolpropan und Pentaerythrit. Vorzugsweise verwendet werden 1,2-Ethandiol, Diethylenglykol, 1,4-Butandiol, 1,6-Hexandiol, Glycerin, Trimethylolpropan oder Mischungen aus mindestens zwei der genannten Diole, insbesondere Mischungen aus Ethandiol, 1,4-Butandiol und 1,6-Hexandiol, Glycerin und/oder Trimethylolpropan. Eingesetzt werden können ferner Polyesterpolyole aus Lactonen, beispielsweise □-Caprolacton, oder Hydroxycarbonsäuren, beispielsweise o-Hydroxycapronsäure und Hydroxyessigsäure.

Stabilisatoren umfassen bevorzugt Schaumstabilisatoren auf der Basis von Polydialkylsiloxan-Polyoxyalkylencopolymeren, wie sie allgemein zur Herstellung von Urethanschaumstoffen mitverwendet werden. Diese Verbindungen sind im allgemeinen so aufgebaut, dass z.B. ein langkettiges Copolymerisat aus Ethylen- und Propylenoxid mit einem Polydimethylsiloxanrest verbunden ist. Die Verknüpfung zwischen der Polydialkylsiloxan und dem Polyetherteil kann dabei über eine SiC-Verknüpfung oder eine Si-O-C-Bindung erfolgen. Strukturell kann der oder können die unterschiedlichen Polyether terminal oder seitenständig an das Polydialkylsiloxan angebunden sein. Der Alkylrest oder die verschiedenen Alkylreste können dabei eine aliphatisch, cycloaliphatisch oder aromatisch sein. Ganz besonders vorteilhaft sind dabei Methylgruppen. In einer weiteren ganz besonders vorteilhaften Ausführung enthält das Polyethersiloxan als Rest Phenylgruppen. Das Polydialkylsiloxan kann dabei linear sein oder auch Verzweigungen enthalten.

Von diesen Schaumstabilisatoren sind solche besonders geeignet, die im allgemeinen eine relativ starke Stabilisierungskraft aufweisen und zur Bildung von weichen, halbharten sowie harten Schaumstoffen verwendet werden.

Als Schaumstoffstabilisatoren für PU Schaumstoffe können beispielsweise L 620, L 635, L 650, L 6900, SC 154, SC 155 der Firma GE Silicones oder Silbyk® 9000, Silbyk® 9001, Silbyk® 9020, Silbyk® TP 3794, Silbyk® TP 3846, Silbyk® 9700, Silbyk® TP 3805, Silbyk® 9705, Silbyk® 9710 der Firma Byk Chemie genannt werden. Des weiteren können die Schaumstabilisatoren BF 2470, B 8255, B 8462, B 4900, B 8123, BF 2270, B 8002, B 8040, B 8232, B 8240, B 8229, B 8110, B 8707, B 8681, B 8716LF der Goldschmidt GmbH eingesetzt werden.

Besonders bevorzugt ist der Stabilisator BF 2370 der Goldschmidt GmbH.

Vorzugsweise werden in dem erfindungsgemäßen Verfahren 0,5 bis 1,5 Gew.-Teile Stabilisator eingesetzt, bezogen auf 100 Gew.-Teile Polyol.

Als chemisches Treibmittel zur Herstellung der Polyurethan-Schaumstoffe wird bevorzugt Wasser eingesetzt, das mit den Isocyanatgruppen unter Freisetzung von Kohlendioxid reagiert. Bevorzugt wird Wasser in einer Menge von 0,2 bis 6 Gew.-Teilen, insbesondere bevorzugt in einer Menge von 1,5 bis 5,0 Gew.-Teilen verwendet. Gemeinsam mit oder an Stelle von Wasser können auch physikalisch wirkende Treibmittel, beispielsweise Kohlendioxid, Aceton, Kohlenwasserstoffe, wie n-, iso- oder Cyclopentan, Cyclohexan oder halogenierte Kohlenwasserstoffe, wie Methylenchlorid, Tetrafluorethan, Pentafluorpropan, Heptafluorpropan, Pentafluorbutan, Hexafluorbutan oder Dichlormonofluorethan, eingesetzt werden. Die Menge des physikalischen Treibmittels liegt dabei vorzugsweise im Bereich zwischen 1 bis 15 Gew.-Teilen, insbesondere 1 bis 10 Gew.-Teilen, die Menge an Wasser vorzugsweise im Bereich zwischen 0,5 bis 10 Gew.-Teilen, insbesondere 1 bis 5 Gew.-Teilen. Kohlendioxid wird von den physikalischen Treibmittel bevorzugt, welches bevorzugt in Kombination mit Wasser als chemischem Treibmittel verwendet wird.

Als Isocyanate kommen die an sich bekannten aliphatischen, cycloaliphatischen, araliphatischen und vorzugsweise aromatischen mehrwertigen Isocyanate in Frage. Besonders bevorzugt werden Isocyanate so eingesetzt, dass das Verhältnis von Isoyanatgruppen und isocyanatreaktiven Gruppen im Bereich von 0,8 bis 1,2 liegt.

Im einzelnen seien beispielhaft genannt: Alkylendiisocyanate mit 4 bis 12 Kohlenstoffatomen im Alkylenrest, wie 1,12-Dodecandiisocyanat, 2-Ethyltetramethylendiisocyanat-1,4, 2-Methylpentamethylendiisocyanat-1,5, Tetramethylendiisocyanat-1,4 und vorzugsweise Hexamethylendiisocyanat-1,6, cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Di- und Polyisocyanate, wie beispielsweise 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,2'-Diphenylmethandiisocyanaten, Polyphenylpolymethylenpolyisocyanate, Mischungen aus 4,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten. Die organischen Di- und Polyisocyanate können einzeln oder in Form ihrer Mischungen eingesetzt werden. Besonders bevorzugt werden Gemische aus Polyphenylpolymethylenpolyisocyanat mit Diphenylmethandiisocyanat, wobei vorzugsweise der Anteil an 2,4'-Diphenylmethandiisocyanat > 30 Gew.-% beträgt.

Vorteilhafterweise werden auch sogenannte modifizierte mehrwertige Isocyanate, d. h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im einzelnen kommen beispielsweise in Betracht: modifiziertes 4,4'-Diphenylmethandiisocyanat, modifizierte 4,4'- und 2,4'-Diphenylmethandiisocyanatmischungen, modifiziertes Roh-MDI oder 2,4- bzw. 2,6-Toluylendiisocyanat, Urethangruppen enthaltende organische, vorzugsweise aromatische Polyisocyanate mit NCO-Gehalten von 43 bis 15 Gew.-%, vorzugsweise von 31 bis 21 Gew.-%, bezogen auf das Gesamtgewicht, beispielsweise Umsetzungsprodukte mit niedermolekularen Diolen, Triolen, Dialkylenglykolen, Trialkylenglykolen oder Polyoxyalkylenglykolen mit Molekulargewichten bis 6000, insbesondere mit Molekulargewichten bis 1500, wobei diese als Di- bzw. Polyoxyalkylenglykole einzeln oder als Gemische eingesetzt werden können. Beispielsweise genannt seien: Diethylen-, Dipropylenglykol, Polyoxyethylen-, Polyoxypropylen- und Polyoxypropylenpolyoxyethenglykole, -triole und/oder - tetrole. Geeignet sind auch NCO-Gruppen enthaltende Prepolymere mit NCO-Gehalten von 25 bis 3,5 Gew.-%, vorzugsweise von 21 bis 14 Gew.-%, bezogen auf das Gesamtgewicht, hergestellt aus den nachfolgend beschriebenen Polyester- und/oder vorzugsweise Polyetherpolyolen und 4,4'-Diphenylmethandiisocyanat, Mischungen aus 2,4'- und 4,4'-Diphenylmethandiisocyanat, 2,4- und/oder 2,6-Toluylendiisocyanaten oder Roh-MDI. Bewährt haben sich ferner flüssige, Carbodiimidgruppen und/oder Isocyanuratringe enthaltende Polyisocyanate mit NCO-Gehalten von 43 bis 15, vorzugsweise 31 bis 21, Gew.-%, bezogen auf das Gesamtgewicht, beispielsweise auf Basis von 4,4'-, 2,4'-und/oder 2,2'-Diphenylmethandiisocyanat und/oder 2,4-und/oder 2,6-Toluylendiisöcyanat.

Die modifizierten Polyisocyanate können miteinander oder mit unmodifizierten organischen Polyisocyanaten, wie beispielsweise 2,4'-, 4,4'-Diphenylmethandiisocyanat, Roh-MDI, 2,4- und/oder 2,6-Toluylendiisocyanat, gemischt werden.

Besonders bewährt haben sich als organische Polyisocyanate und kommen daher vorzugsweise zur Anwendung:

Toluylendiisocyanat, Gemische aus Diphenylmethandiisocyanat-Isomeren, Gemische aus Diphenylmethandiisocyanat und

Polyphenylpolymethylpolyisocyanat oder Toluoldiisocyanat mit Diphenylmethandiisocyanat und/oder Polyphenylpolymethylpolyisocyanat oder sogenannte

Prepolymere. Besonders bevorzugt wird im erfindungsgemäßen Verfahren Toluylendiisocyanat eingesetzt.

In einer besonders bevorzugten Ausführungsvariante werden als organische und/oder modifizierte organische Polyisocyanate Gemische aus Diphenylmethandiisocyanat-Isomeren mit einem Anteil an 2,4'-Diphenylmethandiisocyanat von größer als 20 Gew.-% eingesetzt.

Gegebenenfalls werden den Ausgangsmaterialien auch Flammschutzmittel zugesetzt, bevorzugt solche, die flüssig und/oder in einer oder mehreren der zur Schaumherstellung eingesetzten Komponenten löslich sind. Bevorzugt kommen handelsübliche phosphorhaltige Flammschutzmittel zum Einsatz, beispielsweise Trikresylphosphat, Tris(2-chlorethyl)phosphat, Tris(2-chlorpropyl)phosphat, Tris(2,3-dibrornpropyl)phosphat, Tris- (1,3-dichlorpropyl)phosphat, Tetrakis(2-chlorethyl)ethylendiphosphat, Dimethylmethanphosphonat, Diethylethanphosphonat, Diethanolaminomethylphosphonsäurediethylester. Ebenfalls geeignet sind halogen- und/oder phosphorhaltige, flammschützend wirkende Polyole und/oder Melamin. Des weiteren kann auch Melamin eingesetzt werden. Die Flammschutzmittel werden bevorzugt in einer Menge von maximal 35 Gew.-%, bevorzugt maximal 20 Gew.-%, bezogen auf die Polyolkomponente, eingesetzt. Weitere Beispiele von gegebenenfalls mitzuverwendenden oberflächenaktiven Zusatzstoffen und Schaumstabilisatoren sowie Zellreglern, Reaktionsverzögerern, Stabilisatoren, flammhemmenden Substanzen, Farbstoffen sowie fungistatisch und bakteriostatisch wirksamen Substanzen sowie Einzelheiten über Verwendungs- und Wirkungsweise dieser Zusatzmittel sind in G. Oertel (Hrsg.): "Kunststoff-Handbuch", Band VII, Carl Hanser Verlag, 3. Auflage, München 1993, S. 110-123 beschrieben.

Weiterhin können in dem erfindungsgemäßen Verfahren bevorzugt 0,05 bis 0,5 Gew.-Teile, insbesondere 0,1 bis 0,2 Gew.-Teile Katalysatoren für die Treibreaktion eingesetzt werden. Diese Katalysatoren für die Treibreaktion sind ausgewählt aus der Gruppe der tertiären Amine [Triethylendiamin, Triethylamin, Tetramethylbutandiamin, Dimethylcyclohexylamin, Bis(2-dimethylaminoethyl)ether, Dimethylaminoethoxyethanol, Bis(3-dimethylaminopropyl)amin, N,N,N'-Trimethylaminoethylethanolamin, 1,2-Dimethylimidazol, N(3-Aminopropyl)imidazol, 1-Methylimidazol, N,N,N',N'-Tetramethyl-4,4'-diaminodicyclohexylmethan, N,N-Dimethylethanolamin,N,N-Diethylethanolamin, 1,8-Diazabicyclo-5,4,0-undecen, N,N,N',N'-Tetramethyl-1,3-propandiamin, N,N-Dimethylcyclohexylamin, N,N,N',N'',N'''-Pentamethyldiethylentriamin, N,N,N',N'',N'''-Pentamethyldipropylentriamin, N,N'-Dimethylpiperazin, N-Methylmorpholin, N-Ethylmorpholin, 2,2'-Dimorpholinodiethylether, N,N-Dimethylbenzylamin, N,N',N''-Tris(dimethylaminopropyl)hexahydrotriazin, N,N,N',N'-Tetramethyl-1,6-hexandiamin, Tris(3-dimethylaminopropyl)amin, und/oder Tetramethylpropanamin]. Ebenfalls geeignet sind säureblockierten Derivate der tertiären Amine. In einer besonderen Ausführungsform wird als Amin Dimethylethanolamin eingesetzt. In einer weiteren Ausführungsform wird als Amin Triethylendiamin verwendet.

Auch können in dem erfindungsgemäßen Verfahren bevorzugt 0,05 bis 0,5 Gew.-Teile, insbesondere 0,1 bis 0,3 Gew.-Teile Katalysatoren für die Gel- sowie für die Trimerisierungsreaktion eingesetzt werden. Die Katalysatoren für die Gelreaktion sind ausgewählt aus der Gruppe der metallorganischen Verbindungen und der Metallsalze folgender Metalle: Zinn, Zink, Wolfram, Eisen, Wismut, Titan. In einer besonderen Ausführungsform werden Katalysatoren aus der Gruppe der Zinncarboxylate verwendet. Ganz besonders bevorzugt sind dabei Zinn(2-ethyl-hexanoat) und Zinnricinoleat. Insbesondere Zinn-2-ethylhexanoat ist für die erfindungsgemäße Herstellung eines PU-Weichschaums von Bedeutung. Besonders bevorzugt ist auch die Verwendung von Trimerisierungskatalysatoren wie Kalium(2-ethyl-hexanoat) und Kaliumacetat. Des weiteren sind auch Zinnverbindungen mit vollständig oder teilweise kovalent angebundenen organischen Resten bevorzugt. Besonders bevorzugt wird dabei Dibutylzinndilaurat eingesetzt.

In einer weiteren Ausführungsform wird die der Erfindung zugrunde liegende Aufgabe gelöst durch ein System zur Durchführung des oben beschriebenen Verfahrens umfassend als getrennte Einzelkomponenten mindestens

a) ein oben definiertes Nukleierungsmittel,

b) ein Diisocyanat, und

c) ein Polyol mit den übrigen für die Herstellung des Polyurethanschaumstoffes benötigten Bestandteilen.

Vorzugsweise hat die Einzelkomponente des erfindungsgemäßen Nukleierungsmittels einen Gewichtsanteil bezogen auf alle Einzelkomponenten zusammen in einem Bereich von 0,01 bis 5 Gew.%, insbesondere 0,2 bis 1 Gew.%.

Technisch kann die Anwendung des erfindungsgemäßen Nukleierungsmittels in den verschiedenen, dem Fachmann bekannten Verarbeitungssystemen erfolgen. Eine grundsätzliche Übersicht findet sich G. Oertel (Hrsg.): "Kunststoff-Handbuch", Band VII, Carl Hanser Verlag, 3. Auflage, München 1993, S. 139-192 und in D. Randall und S. Lee (beide Hrsg.):

"The Polyurethanes Book" J. Wiley, 1. Auflage, 2002. Insbesondere kann das erfindungsgemäße Nukleierungsmittel in Hochdruckmaschinen eingesetzt werden. In einer weiteren Anwendung kann die Nanopartikeldispersion in Niederdruckmaschinen verwendet werden. Die Zuführung des Nukleierungsmittels kann dabei separat in die Mischkammer erfolgen. In einer weiteren Verfahrensvariante kann das erfindungsgemäße Nukleierungsmittel auch schon vor der Mischkammer einer der danach in die Mischkammer gelangenden Komponenten zugemischt werden. Besonders vorteilhaft ist dabei eine Mischung mit dem für die Verschäumung zudosierten Wasser oder Polyol. Die Zumischung kann auch im Rohstofftank erfolgen.

Die Anlage zur Herstellung des Polyurethanschaums kann dabei in kontinuierlicher oder auch in diskontinuierlicher Weise betrieben werden. Besonders vorteilhaft ist die Verwendung des erfindungsgemäßen Nukleierungsmittels für die kontinuierliche Verschäumung. Dabei kann der Schäumungsprozess sowohl in horizontaler als auch in vertikaler Richtung erfolgen. In einer weiteren Ausführung kann die erfindungsgemäße Nanopartikeldispersion für die $CO_2$-Technologie benutzt. Hierbei ist die Nanopartikeldispersion für die sehr schnelle Nukleierung besonders vorteilhaft. Auch für eine Beladung der Reaktionsprodukte mit anderen Gasen ist das erfindungsgemäße Nukleierungsmittel besonders geeignet. In einer weiteren Ausführungsform kann die Verschäumung auch in Formen erfolgen.

Ausführungsbeispiele

Folgende Materialien wurden eingesetzt:

Charakterisierung der eingesetzten Nanopartikel:

- Alu 1: basisches Aluminiumoxid, Primärpartikel: < 20 nm, Hersteller: Firma Degussa

- Alu C: neutrales Aluminiumoxid, Primärpartikel: ca. 13 nm, Hersteller: Firma Degussa (s. Figur 6 in Agglomerat in Wasser).

- Aerosil® Ox 50: Siliciumdioxid, Primärpartikel: ca. 40 bis 50 nm, Hersteller: Firma Degussa

- ZnO 20: nicht-modifiziertes hydrophiles Zinkoxid, Primärpartikel: < 50 nm, Hersteller: Firma Degussa

Charakterisierung der eingesetzten Dispergiermittel:

- Tego® Dispers 752 W: Maleinsäureanhydridcopolymer mit Kammstruktur der Tego Chemie Service GmbH.

- Tego® Dispers 650: Styroloxid basierter Polyether der Tego Chemie Service GmbH

- VP-D-102: Alkoxy-Alkyl-Quat der Tego Chemie Service GmbH

Charakterisierung des eingesetzten Calciumcarbonats:

Calciumcarbonat, ausgefällt, purum p.a., mittlere Partikelgröße: 1 bis 2 Mikrometer, Hersteller: Fluka Charakterisierung des eingesetzten Polymerpolyols Voralux® HL 106: Styrol-Acrylnitril-Polymerpolyol der Firma DOW, OHZ = 44

**Allgemeine Rezeptur für die Herstellung der PU Versuchsweichschäume:**

- 100 Gew.-Teile Polyol (Desmophen® PU70RE30 der Firma Bayer, OH-Zahl 56)

- 4,0 Gew.-Teile Wasser (chemisches Treibmittel) (bei den Nanopartikeldispersionen mit Wasser als Lösungsmittel, wird hier entsprechend weniger Wasser eingesetzt)

- 1,0 Gew.-Teile PU-Schaum-Stabilisator (Tegostab® BF 2370 der Goldschmidt GmbH)

- 0,15 Gew.-Teile Katalysator für Treibreaktion (Dimethylethanolamin)

- 0,2 Gew.-Teile Katalysator für Gelreaktion (Kosmos® 29, entspricht Zinn-2-ethylhexanoat)

- x Gew.-Teile des oben definierten Nukleierungsmittels (Nanopartikeldispersion)/(Mikropartikeldispersion)

- 49,8 Gew.-Teile Isocyanat (Toluylendiisocyanat, TDI-80, Index: <105>)

$$\text{Einsatzmenge[\% der Gesamtrezeptur] = Gew.-Teile}$$

$$\text{Nanopartikeldispersion x 100 / Gesamtmasse der Rezeptur}$$

Durchführung:

Polyol, Wasser, Katalysatoren, Stabilisator und optional auch die Nanopartikeldispersion wurden in einem Pappbecher vorgelegt und mit einer Meiserscheibe durchmischt (60 s mit 1000 U/min). Anschließend wurde das Isocyanat (TDI-80) zugegeben und noch einmal mit 1500 U/min für 7 s gerührt. Das Gemisch wurde dann in eine Kiste (30 cm x 30 cm x 30 cm) gefüllt. Während des Aufschäumens wurde dann die Steighöhe mittels einer Ultraschallhöhenmessung gemessen. Die Steigzeit bezeichnet diejenige Zeit, die verstreicht, bis der Schaum seine maximale Steighöhe erreicht hat. Der Rückfall bezeichnet das Absacken der Schaumoberfläche nach dem Abblasen des PU-Schaumes. Dabei wird der Rückfall 3 min nach dem Abblasen in Relation zur maximalen Steighöhe gemessen. Die Gasdurchlässigkeit wurde nach dem Staudruck-Verfahren gemessen.

Beispiele im Einzelnen:

**Vergleichsbeispiel 1: Versuch ohne Nanopartikel**

Steigzeit: 117 s

Rückfall: + 0,3 cm

Steighöhe: 29,0 cm

Dichte des Schaums: 24,4 kg/m$^3$

Gasdurchlässigkeit: 2,4 cm Ethanolsäule

Zellzahl (handgezählt) : 8 bis 9 cm$^{-1}$

Zellzahl (automatisch ausgezählt mit Hilfe von Zellerkennungssoftware): 10,1 cm$^{-1}$

Bruchdehnung: 188 %

Bruchspannung: 100 kPa

Druckverformungsrest (90 %): - 5 %

Stauchhärte (40 %): 3,1 kPa

**Vergleichsbeispiel 2: Versuch nur mit wässriger Lösung des Dispergiermittel Tego® Dispers 752 W, 1,0 Gew. Teil (4,5 % Tego® Dispers 752W in Wasser)**

Steigzeit: 122 s

Rückfall: + 0,0 cm

Steighöhe: 29,5 cm

Dichte des Schaums: 24,0 kg/m$^3$

Gasdurchlässigkeit: 2,5 cm Ethanolsäule

Zellzahl (handgezählt): 11 cm$^{-1}$

Zellzahl (automatisch ausgezählt mit Hilfe von Zellerkennungssoftware): 10,8 cm$^{-1}$

Bruchdehnung: 181 %

Bruchspannung: 102 kPa

Druckverformungsrest (90 %): - 5 %

Stauchhärte (40 %): 3,1 kPa

**Vergleichsbeispiel 3: Versuch nur mit Dispergiermittel Tego® Dispers 650, 1,0 Teil (100% Tego® Dispers 650)**

Steigzeit: 123 s

Rückfall: + 0,0 cm

Steighöhe: 30,0 cm

Dichte des Schaums: 24,1 kg/m$^3$

Gasdurchlässigkeit: 3,2 cm Ethanolsäule

Zellzahl (handgezählt) : 10 cm$^{-1}$

Zellzahl (automatisch ausgezählt mit Hilfe von Zellerkennungssoftware) : 11,6 cm$^{-1}$

Bruchdehnung: 181 %

Bruchspannung: 95 kPa

Druckverformungsrest (90 %): - 5 %

Stauchhärte (40 %): 3,2 kPa

**Vergleichsbeispiel 4: Versuch mit Calciumcarbonat 1,0 Gew. Teil (Fluka 21060, 30 Gew. % in Polyol Desmophen® PU70RE30)**

Steigzeit: 120 s

Rückfall: + 0,0 cm

Steighöhe: 29,8 cm

Dichte des Schaums: 24,0 kg/m$^3$

Gasdurchlässigkeit: 3,1 cm Ethanolsäule

Zellzahl (handgezählt) : 11 cm$^{-1}$

Zellzahl (automatisch ausgezählt mit Hilfe von Zellerkennungssoftware): 12 cm$^{-1}$

Bruchdehnung: 139 %

Bruchspannung: 95 kPa

Druckverformungsrest (90 %): - 4 %

Stauchhärte (40 %): 3,7 kPa

**Vergleichsbeispiel 5: Versuch mit Polymerpolyol Voralux® HL 106, 1,0 Gew. Teil**

Steigzeit: 119 s

Rückfall: + 0,0 cm

Steighöhe: 29,9 cm

Dichte des Schaums: 24,2 kg/m$^3$

Gasdurchlässigkeit: 3,6 cm Ethanolsäule

Zellzahl (handgezählt) : 8 cm$^{-1}$

Zellzahl (automatisch ausgezählt mit Hilfe von Zellerkennungssoftware) : 11 cm$^{-1}$

Bruchdehnung: 176 %

Bruchspannung: 94 kPa

Druckverformungsrest (90 %): - 5 %

Stauchhärte (40 %): 3,0 kPa

**Vergleichsbeispiel 6: Versuch mit EMIM ES, 1,0 Teil**

Steigzeit: 118 s

Rückfall: + 0,1 cm

Steighöhe: 29,6 cm

Dichte des Schaums: 24,75 kg/m$^3$

Gasdurchlässigkeit: 1,1 cm Ethanolsäule

Zellzahl (handgezählt): 12 cm$^{-1}$

Zellzahl (automatisch ausgezählt mit Hilfe von Zellerkennungssoftware): 12,8 cm$^{-1}$

Bruchdehnung: 161 %

Bruchspannung: 103 kPa

Druckverformungsrest (90 %): - 5 %

Stauchhärte (40 %): 3,6 kPa

**Vergleichsbeispiel 7: Versuch mit VP-D 102, 1,0 Teil**

Steigzeit: 114 s

Rückfall: 0 cm

Steighöhe: 30,0 cm

Dichte des Schaums: 24,55 kg/m$^3$

Gasdurchlässigkeit: 1,0 cm Ethanolsäule

Zellzahl (handgezählt): 12 cm$^{-1}$

Zellzahl (automatisch ausgezählt mit Hilfe von Zellerkennungssoftware): 11,9 cm$^{-1}$

Bruchdehnung: 156 %

Bruchspannung: 94 kPa

Druckverformungsrest (90 %): - 5 %

Stauchhärte (40 %): 3,4 kPa

**Beispiel 1:**

1,0 Gew.-Teile [Alu C Nanopartikel (15 Gew. %) + EMIM ES (85 Gew. %; ionische Flüssigkeit und zugleich Dispergiermittel)]

Steigzeit: 123 s

Rückfall: +0,4 cm

Steighöhe: 27,5 cm

Dichte des Schaums: 27,2 kg/m$^3$

Gasdurchlässigkeit: 2,4 cm Ethanolsäule

Zellzahl (handgezählt) : 16 bis 17 cm$^{-1}$

Zellzahl (automatisch ausgezählt mit Hilfe von Zellerkennungssoftware): 17,5 cm$^{-1}$

Bruchdehnung: 100 %

Bruchspannung: 79 kPa

Druckverformungsrest (90 %): - 5 %

Stauchhärte (40 %): 3,1 kPa

**Beispiel 2:**

1,0 Gew.-Teile [Alu 1 Nanopartikel (30 Gew.%) + Tego® Dispers 752W (4,5 Gew.%) (Dispergiermittel) + Wasser (65,5 Gew.%) (Lösungsmittel)]

Steigzeit: 116 s

Rückfall: + 0,1 cm

Steighöhe: 29,8 cm

Dichte des Schaums: 24,1 kg/m$^3$

Gasdurchlässigkeit: 0,9 cm Ethanolsäule

Zellzahl (handgezählt): 16 bis 17 cm$^{-1}$

Zellzahl (automatisch ausgezählt mit Hilfe von Zellerkennungssoftware): 17,2 cm$^{-1}$

Bruchdehnung: 155 %

Bruchspannung: 92 kPa

Druckverformungsrest (90 %): - 5 %

Stauchhärte (40 %): 3,2 kPa

**Beispiel 3:**

1,0 Gew.-Teile [Zinkoxid-Nanopartikel (30 Gew. %) + VP-D102 (70 Gew.%)(Dispergiermittel)]

Steigzeit: 110 s

Rückfall: + 0,4 cm

Steighöhe: 27,2 cm

Dichte des Schaums: 27,8 kg/m$^3$

Gasdurchlässigkeit: 1,9 cm Ethanolsäule

Zellzahl (handgezählt): 17 - 18 cm$^{-1}$

Zellzahl (automatisch ausgezählt mit Hilfe von Zellerkennungssoftware): 18,2 cm$^{-1}$

Bruchdehnung: 100 %

Bruchspannung: 82 kPa

Druckverformungsrest (90 %): - 5 %

Stauchhärte (40 %): 3,2 kPa

**Beispiel 4:**

1,0 Gew.-Teile [Aerosil® Ox 50 (Siliciumdioxid)-Nanopartikel (30 Gew.%) + Tego® Dispers 650 (70 Gew.%) (Dispergiermittel)]

Steigzeit: 115 s

Rückfall: + 0,3 cm

Steighöhe: 27,1 cm

Dichte des Schaums: 27,4 kg/m$^3$

Gasdurchlässigkeit: 1,4 cm Ethanolsäule

Zellzahl (handgezählt): 17 - 18 cm$^{-1}$

Zellzahl (automatisch ausgezählt mit Hilfe von Zellerkennungssoftware): 17,5 cm$^{-1}$

Bruchdehnung: 96 %

Bruchspannung: 76 kPa

Druckverformungsrest (90 %): - 5 %

Stauchhärte (40 %): 3,1 kPa

**Beispiel 5: Konzentrationsreihe mit Nanopartikeldispersion** (Aerosil® Ox 50 (30 Gew.%) + Tego® Dispers 752W (4,5 Gew.%) + 65,5 Gew.% Wasser)

| | | | | | | |
|---|---|---|---|---|---|---|
| Einsatzmenge Nanopartikeldispersion (30 Gew.%) [Teile bezogen auf 100 Teile Polyol] | 0,0 | 0,01 | 0,1 | 0,25 | 0,5 | 1,0 |
| Einsatzmenge Nanopartikeldispersion (30 Gew.%) [Gew.% der Schaummasse] | 0,0 | 0,0065 | 0,065 | 0,16 | 0,32 | 0,64 |
| Einsatzmenge reiner Nanopartikel[Gew.% der Schaummasse] | 0,0 | 0,002 | 0,02 | 0,048 | 0,096 | 0,19 |
| Steigzeit [s] | 114 | 112 | 115 | 118 | 120 | 120 |
| Rückfall [cm] | +0,1 | +0,1 | 0 | 0 | 0 | 0 |
| Steighöhe [cm] | 29,3 | 29,6 | 29,5 | 29,7 | 30,2 | 29,4 |
| Gasdurchlässigkeit [cm Ethanolsäule] | 5,4 | 5,0 | 5,1 | 4,0 | 4,0 | 3,1 |
| Zellzahl (handgezählt) [cm$^{-1}$] | 9 | 9 | 9 | 10 | 14 | 15 |
| Zellzahl (automatisch ausgezählt mit Hilfe von Zellerkennungssoftware) [cm$^{-1}$] | 9,3 | 9,8 | 9,9 | 11,2 | 13,0 | 13,9 |

**Beispiel 6: Konzentrationsreihe mit reinen Calciumcarbonat-Mikropartikeln**

| | | | | | | | |
|---|---|---|---|---|---|---|---|
| Einsatzmenge reines Calciumcarbonat (Mikropartikel) [Teile bezogen auf 100 Teile Polyole] | 0,0 | 0,01 | 0,1 | 0,25 | 0,5 | 1,0 | 5,0 |
| Einsatzmenge reines Calciumcarbonat (Mikropartikel) [Gew.% der Schaummasse] | 0,0 | 0,0065 | 0,065 | 0,16 | 0,32 | 0,64 | 3,1 |
| Steigzeit [s] | 114 | 112 | 114 | 115 | 114 | 118 | 120 |
| Rückfall [cm] | +0,1 | 0,0 | 0,0 | 0,0 | 0,0 | 0,0 | 0,0 |
| Steighöhe [cm] | 29,3 | 29,7 | 29,5 | 29,5 | 30,0 | 30,0 | 29,8 |
| Gasdurchlässigkeit [cm Ethanolsäule] | 5,4 | 5,0 | 5,8 | 4,4 | 4,0 | 3,7 | 3,2 |
| Zellzahl (handgezählt) [cm$^{-1}$] | 9 | 9 | 9 | 10 | 11 | 11 | 14 |

(fortgesetzt)

| Zellzahl (automatisch ausgezählt mit Hilfe von Zellerkennungssoftware) [cm$^{-1}$] | 9,3 | 9,8 | 10,2 | 10,5 | 10,6 | 11,9 | 13,5 |
|---|---|---|---|---|---|---|---|

**Allgemeine Rezeptur für PU Hartschaum**

Für den folgenden Vergleich wurden Hartschaumstoffe in einer 145 cm x 14 cm x 3,5 cm großen, auf 45 °C temperierten, verschließbaren metallischen Form durch eine Handverschäumung einer Polyurethanformulierung mit folgenden Bestandteilen produziert:

| | |
|---|---|
| 100,00 Teile | Sorbitol/Glycerol basierendes Polyetherpolyol (460 mg KOH/g) |
| 2,60 Teile | Wasser |
| 1,50 Teile | Dimethylcyclohexylamin |
| 2,0 Teile | Stabilisator B 8462 |
| 15,00 Teile | Cyclopentan |
| 198,50 Teile | Diphenylmethandiisocyanat, Isomere u. Homologe Isocyanatgehalt: 31,5 %) |

Die erhaltenen Hartschaumstoffe wurden visuell mittels eines Mikroskops ausgezählt.

**Vergleichsbeispiel 8: Hartschaum ohne Nanopartikeldispersion**

Dichte des Schaums: 33 kg/m$^3$
Wärmeleitfähigkeit: 23,8 mW / mK
Zellzahl (handgezählt): 30 cm$^{-1}$

**Beispiel 7: Hartschaum mit Nanopartikeldispersion**

(Nanopartikel Alu C (30 Gew.%) + Tego® Dispers 752W (4,5 Gew.%) + 65,5 Gew.% Wasser)

Dichte des Schaums: 33 kg/m$^3$

Wärmeleitfähigkeit: 22,9 mW / mK

Zellzahl (handgezählt) : 45 cm$^{-1}$

**Patentansprüche**

1. Nukleierungsmittel für die Herstellung von Polyurethanschaumstoff, das **dadurch gekennzeichnet ist, dass** es

   a) 0,5 bis 60 Gew.% Nanopartikel mit einem durchschnittlichen Durchmesser in einem Bereich von 1 bis 400 nm,
   b) 0,5 bis 99,5 Gew.% Dispergiermittel, und
   c) 0 bis 99 Gew.% Lösungsmittel

   jeweils bezogen auf die Gesamtmenge des Nukleierungsmittels enthält.

2. Nukleierungsmittel gemäß Anspruch 1, **dadurch gekennzeichnet, dass** der Durchmesser der Nanopartikel in einem Bereich von 10 bis 200 nm, insbesondere von 10 bis 50 nm liegt.

3. Nukleierungsmittel gemäß Anspruch 1, **dadurch gekennzeichnet, dass** der Anteil an Dispergiermittel in einem Bereich von 1 bis 45, insbesondere von 2 bis 10, und ganz besonders von 4 bis 5 Gew.% liegt.

4. Nukleierungsmittel gemäß Anspruch 1, **dadurch gekennzeichnet, dass** der Anteil an Nanopartikeln in einem Bereich von 25 bis 35, insbesondere etwa bei 30 Gew.% liegt.

5. Nukleierungsmittel gemäß Anspruch 1, **dadurch gekennzeichnet, dass** die Nanopartikel aus Metalloxid, insbesondere aus einem Material bestehen, das ausgewählt ist aus der Gruppe $SiO_2$, $ZnO_2$, $Al_2O_3$, $ZrO_2$ oder $TiO_2$.

6. Nukleierungsmittel gemäß Anspruch 1, **dadurch gekennzeichnet, dass** es frei von PU-Schaum-Stabilisator ist.

7. Polyurethanschaumstoff, der **dadurch gekennzeichnet ist, dass** er eine Zellzahl von mindestens 10 $cm^{-1}$ aufweist und 0,01 bis 5 Gew.% Nanopartikel mit einem durchschnittlichen Durchmesser in einem Bereich von 1 bis 400 nm enthält.

8. Polyurethanschaumstoff gemäß Anspruch 7, **dadurch gekennzeichnet, dass** er eine Zellzahl von mindestens 15 $cm^{-1}$ aufweist.

9. Polyurethanschaumstoff gemäß Anspruch 7, **dadurch gekennzeichnet, dass** er ein Weichschaum, Hartschaum oder mikrozellulärer Schaum ist.

10. Polyurethanschaumstoff gemäß Anspruch 7, **dadurch gekennzeichnet, dass** er eine Dichte in einem Bereich von 10 bis 80, insbesondere von 15 bis 50, ganz besonders von 22 bis 30 $kg/m^3$ aufweist.

11. Polyurethanschaumstoff gemäß Anspruch 7, **dadurch gekennzeichnet, dass** er eine Gasdurchlässigkeit in einem Bereich von 0,1 bis 30, insbesondere von 0,7 bis 10 cm Ethanolsäule aufweist.

12. Polyurethanschaumstoff gemäß Anspruch 7, **dadurch gekennzeichnet, dass** er einen Anteil von Nanopartikeln in einem Bereich von 0,01 bis 5, insbesondere von 0,01 bis 1, ganz besonders von 0,15 bis 0,74 Gew.% aufweist.

13. Verwendung des Nukleierungsmittels gemäß Anspruch 1 zur Herstellung von Polyurethanschaumstoff.

14. Verfahren zur Zellstruktursteuerung von Polyurethanschaum das **dadurch gekennzeichnet ist, dass** vor der Zugabe von Diisocyanat im Herstellungsprozess von Polyurethanschaumstoff 0,01 bis 5 Gew.% des Nukleierungsmittels gemäß Anspruch 1 bezogen auf die Gesamtmenge des Polyurethanschaumstoffs zugegeben werden, wobei die Zellstruktur im wesentlichen durch die Menge des Nukleierungsmittels, die Menge des Dispergiermittels im Nukleierungsmittel und die Menge und den Durchmesser der Nanopartikel im Nukleierungsmittel gesteuert wird.

15. Verfahren zur Zellstruktursteuerung gemäß Anspruch 14, **dadurch gekennzeichnet, dass** Nukleierungsmittel in einem Mengenbereich von 0,15 bis 4 Gew.% zugegeben wird.

16. Verfahren zur Herstellung von PU Schaum umfassend mindestens die Schritte:

    a) Vermischen von 100 Gew.-Teilen Polyol, 0,2 bis 6 Gew.-Teilen chemischem Treibmittel, 0,1 bis 5 Gew.-Teilen Stabilisator und 0,01 bis 5 Gew.-Teilen Nukleierungsmittel gemäß Anspruch 1,
    b) Zugeben von 30 bis 70 Gew.-Teilen eines Diisocyanats, und
    c) Vermischen der resultierenden Zusammensetzung.

17. Verfahren zur Herstellung von PU Schaum gemäß Anspruch 16, **dadurch gekennzeichnet, dass** 0,5 bis 1,5, insbesondere 0,5 bis 1 Gewichtsteile Nukleierungsmittel eingesetzt werden.

18. System zur Durchführung des Verfahrens gemäß Anspruch 4 umfassend als getrennte Einzelkomponenten mindestens

    a) ein Nukleierungsmittel gemäß Anspruch 1,
    b) ein Diisocyanat, und
    c) ein Polyol mit den übrigen für die Herstellung des Polyurethanschaumstoffes benötigten Bestandteilen.

19. System gemäß Anspruch 20, **dadurch gekennzeichnet , dass** das Gewicht der Komponente des Nukleierungsmittels vom Gesamtgewicht des Systems einen Anteil in einem Bereich von 0,01 bis 5, insbesondere von 0,2 bis 1 Gew.% aufweist.

Figur 1/5

**Einfluß verschiedener partikulärer Zusätze auf die Zellgröße im PU Schaum**
**(handgezählt)**

- - ◇ - - Calciumcarbonat

——◆—— Beispiel 5

Figur 2/5

**Einfluß verschiedener partikulärer Zusätze auf die Zellgröße im PU Schaum**
**(handgezählt)**

- - ◇ - - Calciumcarbonat

——◆—— Beispiel 5

Figur 3/5

**Einfluß verschiedener partikulärer Zusätze auf die Zellgröße im PU Schaum
(automatisch gezählt)**

Einsatzmenge Nukleierungsadditiv [Gew.
Teile bezogen auf 100 Teile Polyol]

Figur 4/5

**Einfluß verschiedener partikulärer Zusätze auf die Zellgröße im PU Schaum
(automatisch gezählt)**

Einsatzmenge Nukleierungsadditiv [Gew. %
der Schaummasse]

Figur 5/5

EP 1 683 831 A1

Europäisches
Patentamt

**EUROPÄISCHER RECHERCHENBERICHT**

Nummer der Anmeldung

EP 06 00 0457

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| D,X | JAVNI, I.; ZHANG, W.; KARAJKOV, V.; PETROVIC, Z.S.: "Effect of Nano- and Micro-Silica Fillers on Polyurethane Foam Properties" JOURNAL OF CELLULAR PLASTICS, Bd. 38, 2002, Seiten 229-239, XP009062376 * das ganze Dokument * ----- | 1-17 | C08K3/22 C08L75/04 C08J9/00 |
| X | US 5 114 980 A (LII ET AL) 19. Mai 1992 (1992-05-19) * Zusammenfassung; Ansprüche 1,7; Beispiele 1-4; Tabellen A,B,1-12 * ----- | 1-17 | |
| X | US 4 278 770 A (CHANDALIA ET AL) 14. Juli 1981 (1981-07-14) * Spalte 3, Zeile 17 - Spalte 7, Zeile 9; Anspruch 1; Beispiele 1-12 * ----- | 1-19 | |
| X | US 2002/128336 A1 (KOLB BRANT U ET AL) 12. September 2002 (2002-09-12) * Zusammenfassung * * Absätze [0001] - [0004], [0010], [0026] - [0034], [0041] - [0065], [0090], [0104] - [0139] * ----- | 1-6, 13-15 | RECHERCHIERTE SACHGEBIETE (IPC) C08K C08J |
| X | CAO X ET AL: "Polyurethane/clay nanocomposites foams: processing, structure and properties" POLYMER, ELSEVIER SCIENCE PUBLISHERS B.V, GB, Bd. 46, Nr. 3, 8. Dezember 2004 (2004-12-08), Seiten 775-783, XP004705996 ISSN: 0032-3861 * das ganze Dokument * ----- -/-- | 1-5, 7-16,18, 19 | |

Der vorliegende Recherchenbericht wurde für alle Patentansprüche erstellt

| Recherchenort | Abschlußdatum der Recherche | Prüfer |
|---|---|---|
| München | 28. Februar 2006 | Meiners, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.....................................................................................
& : Mitglied der gleichen Patentfamilie, übereinstimmendes Dokument

EPO FORM 1503 03.82 (P04C03)

**Europäisches Patentamt**

**EUROPÄISCHER RECHERCHENBERICHT**

Nummer der Anmeldung

EP 06 00 0457

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| P,X | WO 2005/019328 A (BAYER MATERIALSCIENCE AG; BECK, CHRISTIAN; WAGNER, JOACHIM; EHBING, HU) 3. März 2005 (2005-03-03) * Seite 5, Zeile 7 - Seite 11, Zeile 13 * * Beispiele * ----- | 1-19 | |
| X | WO 03/016370 A (CHEMIEWERK BAD KOESTRITZ GMBH; TSCHRITTER, HARTMUT; KNOELLE, GABRIELE;) 27. Februar 2003 (2003-02-27) * Zusammenfassung * * Beispiele 1-6 * ----- | 1-17 | |
| D,X | US 2003/205832 A1 (LEE L. JAMES ET AL) 6. November 2003 (2003-11-06) * Zusammenfassung * * Absätze [0007] - [0010], [0063], [0086]; Ansprüche 1,5-9,25; Abbildungen 1-26 * ----- | 1-6, 13-15 | |
| X | WO 93/07193 A (THE DOW CHEMICAL COMPANY) 15. April 1993 (1993-04-15) * Ansprüche 1,10; Beispiele 1-3; Tabellen 1-3 * ----- | 1-19 | RECHERCHIERTE SACHGEBIETE (IPC) |
| X | DE 199 33 819 A1 (BAYER AG) 1. Februar 2001 (2001-02-01) * Zusammenfassung * * Seite 6, Zeile 38 - Seite 7, Zeile 56; Ansprüche 1-7; Beispiele 1-7 * ----- | 1-19 | |

Der vorliegende Recherchenbericht wurde für alle Patentansprüche erstellt

| Recherchenort | Abschlußdatum der Recherche | Prüfer |
|---|---|---|
| München | 28. Februar 2006 | Meiners, C |

EPO FORM 1503 03.82 (P04C03)

# EP 1 683 831 A1

## ANHANG ZUM EUROPÄISCHEN RECHERCHENBERICHT
## ÜBER DIE EUROPÄISCHE PATENTANMELDUNG NR.

EP 06 00 0457

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-02-2006

| Im Recherchenbericht angeführtes Patentdokument | | Datum der Veröffentlichung | Mitglied(er) der Patentfamilie | | Datum der Veröffentlichung |
|---|---|---|---|---|---|
| US 5114980 | A | 19-05-1992 | KR | 9706709 B1 | 29-04-1997 |
| US 4278770 | A | 14-07-1981 | KEINE | | |
| US 2002128336 | A1 | 12-09-2002 | BR | 0116725 A | 23-12-2003 |
| | | | CN | 1503819 A | 09-06-2004 |
| | | | EP | 1358254 A2 | 05-11-2003 |
| | | | JP | 2004518793 T | 24-06-2004 |
| | | | TW | 548301 B | 21-08-2003 |
| | | | WO | 02062881 A2 | 15-08-2002 |
| WO 2005019328 | A | 03-03-2005 | DE | 10338163 A1 | 10-03-2005 |
| | | | US | 2005043424 A1 | 24-02-2005 |
| WO 03016370 | A | 27-02-2003 | AT | 295383 T | 15-05-2005 |
| | | | DE | 10293632 D2 | 01-07-2004 |
| | | | EP | 1414880 A1 | 06-05-2004 |
| US 2003205832 | A1 | 06-11-2003 | AU | 2003302767 A1 | 13-08-2004 |
| | | | WO | 2004065461 A2 | 05-08-2004 |
| | | | US | 2005004243 A1 | 06-01-2005 |
| WO 9307193 | A | 15-04-1993 | CA | 2119570 A1 | 15-04-1993 |
| | | | EP | 0607312 A1 | 27-07-1994 |
| DE 19933819 | A1 | 01-02-2001 | AU | 6690800 A | 05-02-2001 |
| | | | WO | 0105883 A1 | 25-01-2001 |

EPO FORM P0461

Für nähere Einzelheiten zu diesem Anhang : siehe Amtsblatt des Europäischen Patentamts, Nr.12/82

24